# EUROPEAN PATENT SPECIFICATION

(11) **EP 0 323 159 B1**
(45) Date of publication and mention of the grant of the patent: **13.01.1993**
(21) Application number: 88312219.4
(22) Date of filing: 22.12.1988
(51) Int. Cl.: B60B 27/00, G01P 3/48

(54) **Automobile wheel bearing unit**
Fahrzeugradlageranordnung
Roulement de roue pour véhicule

(30) Priority: 28.12.1987 JP 333752/87
(43) Date of publication of application: 05.07.1989
(73) Proprietor: KOYO SEIKO CO., LTD., Osaka-shi Osaka 542 (JP)
(72) Inventor: Okumura, Tsuyoshi c/o Koyo Seiko Co.,Ltd, Osaka-shi Osaka-fu (JP)
(74) Representative: Ellis, Edward Lovell

(56) References cited:
- FR-A- 2 133 955
- FR-A- 2 365 055

## Description

The present invention relates to an automobile wheel bearing unit of the kind including rolling elements, a cage, an external member to be mounted to a chassis of an automobile, an internal member to be connected with a wheel, an annular member mounted on and turning in conjunction with said internal member, and a rotational speed detector which detects a rotational speed of said annular member.

In some automobiles, a rotational velocity of each wheel is detected with a rotational speed detector and the operation of the brake cylinders is controlled according to the velocity of each wheel in order to prevent the wheels from locking when the brakes are suddenly applied on a frozen road surface.

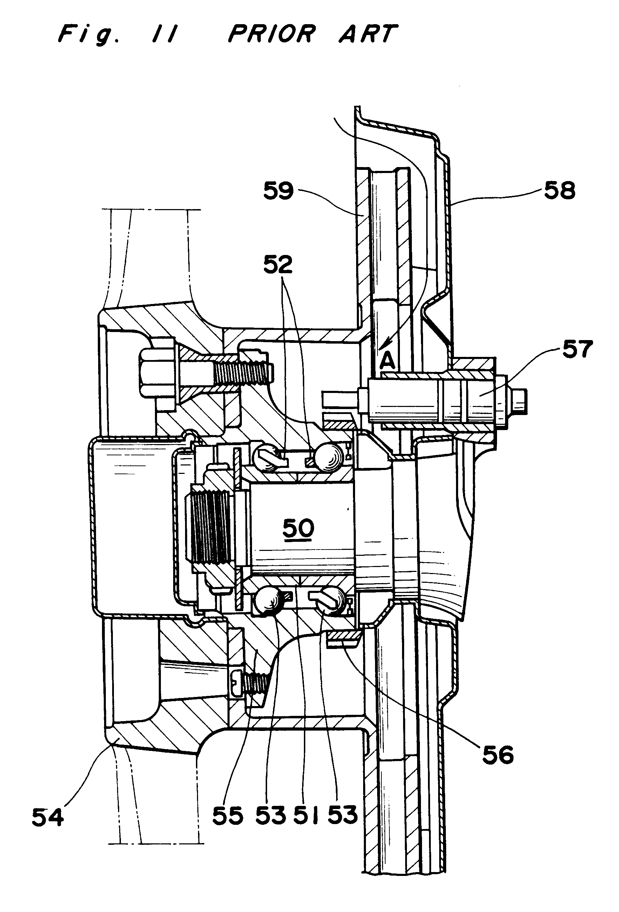

Such a rotational speed detector as is known from the prior art is shown in Fig. 11. This wheel bearing unit comprises an inner ring 51 mounted on axle end 50 laterally projecting from a chassis as an idler, cage 52 fit over inner ring 51 and holding multiple rolling elements 53, an outer ring 55 to which is mounted wheel 54 and which is free to move around said rolling elements 53, pulser 56 which comprises a powerful magnetic body fit over said outer ring 55 and secured to ring 55 the side thereof opposite that of wheel 54 and which has gear tooth-like projections extending at the circumference thereof, and speed sensor 57 which is mounted on the chassis at the base of axle end 50 A minimal gap is provided between the outer circumference of pulser 56 and speed sensor 57 which has a built-in permanent magnet and coil. When pulser 56 rotates in conjunction with wheel 54, magnetic flux emanating from the permanent magnet of speed sensor 57 is varied by the gear tooth-like projections on the outer circumference of said pulser, thus generating an AC voltage of a frequency proportional to the rotational speed of said pulser in the coil; it is therefore possible to obtain the rotational speed of wheel 54 by thus detecting the frequency of this AC voltage.

However, according to the conventional automobile wheel bearing unit, speed sensor 57 is mounted at the base of axle end 50 so as to project from protective cover 58 on the chassis. Thus grit, mud, water and other foreign substances are able to penetrate to a detector head of speed sensor 57 as shown by arrow A through a gap between said protective cover 58 and brake shoe 59 mounted on wheel 54, thereby resulting in corrosion and damage to said detector head. Furthermore, such grit, water and other foreign substances may damage the teeth on the circumference of pulser 56, and may clog the gaps between said teeth, thus causing in either case a major problem of the loss of the ability to detect with good precision the rotational speed of the wheel.

FR-A-2 133 955 discloses a device for detecting relative motions in a bearing. A bearing assembly includes closing means which are mounted on one rotatable element and which in combination with at least another rotatable element define a closed space. The device and a source of energy are mounted on the closing means such that when used, the source transmits energy to the device within the closed space.

FR-A-2 365 055 relates to a method of adjusting pre-load on or clearance in bearings such as tapered roller bearings or angular contact bearings, to a predetermined value, when the bearings are installed.

It is an object of the present invention to overcome the problems referred to above by providing a compact, lightweight automobile wheel bearing unit equipped with a wheel rotational speed detector of the kind which is free from being damaged by the penetration of grit, water and other foreign substances and which therefore enables a detection of the rotational speed of the wheel with good precision over an extended period.

According to the present invention there is provided an automobile wheel bearing unit as set out in claim 1.

The sealing members prevent the penetration of grit, muddy water, or the like into the unit of the rotational detector and annular member. Furthermore, because the annular member is mounted to the internal member, and the rotational detector is positioned between the inner peripheral surface of the sealing member and the outer peripheral surface of the nut, and is mounted to the sealing member opposite the end surface of the annular member as taken in the axial direction of the unit, the rotational detector does not extend to the outside of said sealing member, and can be designed to be smaller and weigh less than known detectors.

The present invention will now be described in greater detail by way of examples with reference to the accompanying drawings, wherein:-
Figs. 1 and 2 are a vertical cross sectional and a front view, respectively, of a first embodiment according to the present invention;
Fig. 3 is a vertical cross sectional view of an embodiment in which a pulser is integrated with an inner ring;
Figs. 4 and 5 are a vertical cross section and front view, respectively, of a second embodiment according to the present invention;
Figs. 6 and 7 are a vertical cross sectional and a front view, respectively, of an alternative pulser according to the present invention;
Figs. 8 and 9 are a vertical cross sectional and a front view, respectively, of a washer comprising a pulser according to the second embodiment of the present invention;
Fig. 10 is an enlarged detailed cross-sectional of projections at a pitch circle of a pulser of the present invention and
Fig. 11 is a vertical cross sectional view of a conventional automobile wheel bearing unit comprising a rotational speed detector.

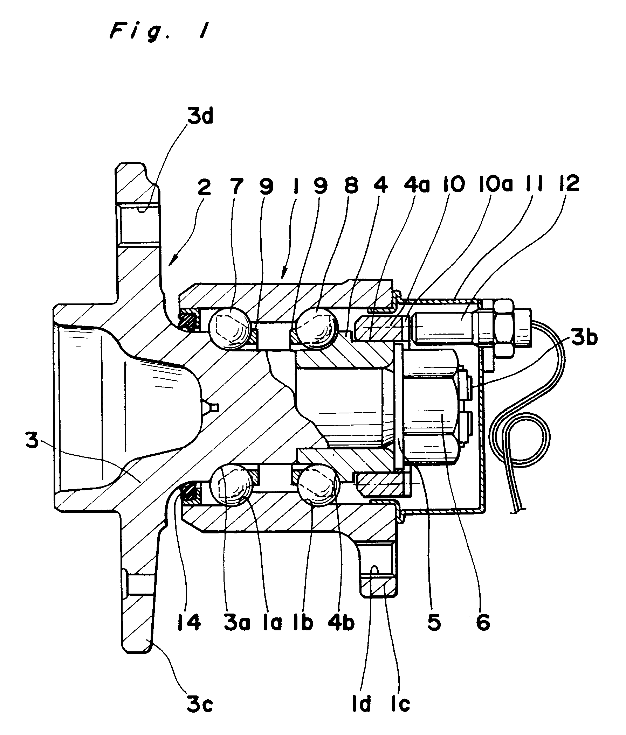

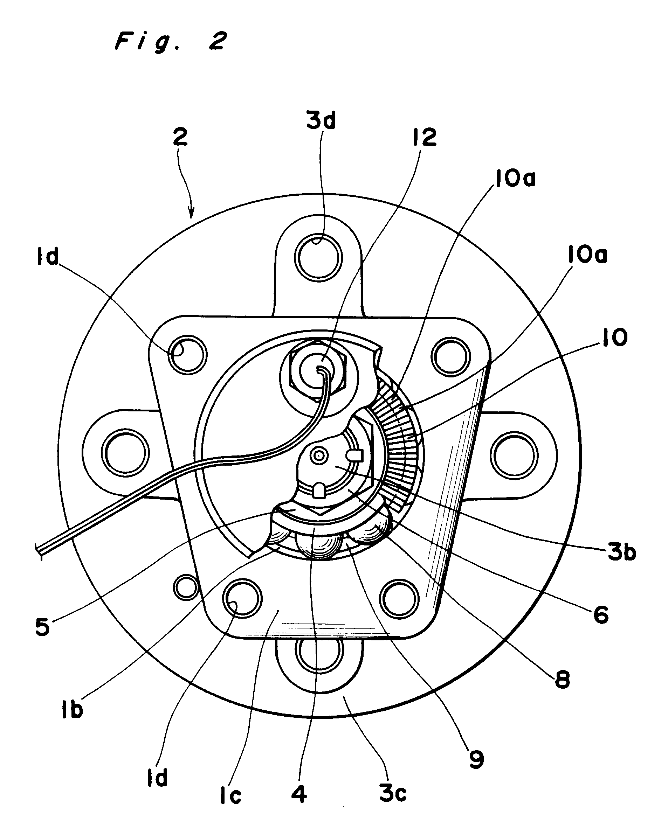

Fig. 1 and Fig. 2 are a vertical cross sectional view and a rear view, respectively, of a first embodiment of an automobile wheel bearing unit according to the present invention in which an outer ring 1 is mounted on a chassis of an automobile not shown, and an internal member 2 is composed of axle 3, which has flange 3c to which is mounted a wheel not shown, an inner ring 4, which fits over the other end of axle 3. The inner ring 4 is fixed to the axle 3 by a washer 5 and nut 6 fitting on external thread 3b on the other end of axle 3. On a fitting surface 4a of the inner ring 4 is fitted and secured a pulser 10 in the form of an annular member having axial projections 10a extending in the radial directions and at uniform intervals in the circumferential direction on a back axial end face thereof. Furthermore, balls 7,8 as rolling elements are positioned at uniform intervals in a ring pattern in the circumferential direction by cages 9,9 between the outer ring 1 and internal member 2. The balls 7,8 contact, respectively, opposing races 1a, 3a in the outer ring 1 and axle 3, and opposing races 1b, 4b in outer ring 1 and inner ring 4 so that they can roll freely. A cover case 11 forming a sealing member is fitted to the end of the outer ring 1 to cover said nut 6 and pulser 10. Rotational detector 12 is mounted in an axial end wall of the cover case 11. The rotational detector 12 is positioned between an inner peripheral surface of the cover case 11 and the outer peripheral surface of the nut 6, and is mounted on the cover case 11 with its detector face opposed to the pulser 10 in the axial direction. It is to be noted that the rotational detector 12 may be of a type with a built-in permanent magnet and coil, or with a magnetic resistance element, or may be of various other types, but the type shown in the present embodiment is of the kind having a permanent magnet and coil.

The aforementioned outer ring 1 is mounted on the bottom of a strut, not shown in the figure, which is mounted on the automobile chassis by bolts, not shown in the figure, passing through bolt holes 1d at the four corners of trapezoidal flange 1c formed at the back end. Also, the wheel is mounted to flange 3c of the axle 3 by bolts, not shown in the figure, passing through four bolt holes 3d. A gap between the front end of outer ring 1 and internal member 2 is sealed by oil seal 14; the oil seal 14 and the cover case 11 completely seal he pulser 10, rotational detector 12 mounted on the cover case 11, inner ring 4 inserted in the outer ring 1, balls 7,8 and cages 9,9 from the exterior.

When the vehicle is driven with the automobile wheel bearing unit constructed as so described, the axle 3 on which the wheel and inner ring 4 are mounted rotates and the pulser 10 rotates in conjunction with them. Magnetic flux emitted from the permanent magnet of rotational detector 12 mounted on the cover case 11 on the chassis side in opposition in the axial direction to the pulser 10 is thur varied by the projections 10a of the pulser, and a voltage of a frequency proportional to the speed of the pulser 10 is produced in the coil of the rotational detector 12. Next, the frequency of said voltage output from rotational detector 12 is detected by a detector, not shown in the figure, and the speed of the wheel is obtained. Because the pulser 10 and the end of the rotational detector 12 are completely sealed from the exterior by the cover case 11 and oil seal 14, grit, water and other foreign substances cannot penetrate to this area, damage, clogging or other interference caused by such substances does not occur, and the speed of the wheel can be detected with high precision over an extended period by the pulser 10 and the rotational detector 12. Furthermore, because the pulser 10 is installed on the inner ring 4 and not on the outer ring as in conventional devices, the pulser 10 can be made smaller and lighter, and the wheel bearing unit can therefore be made more compact. Furthermore, because the pulser 10 is mounted in opposition in the axial direction to the rotational detector 12 mounted on the cover case 11 at a location inset relative to outer ring 1 so that rotational detector 12 is between the inner circumference of the cover case 11 and the outer circumference of the nut 6, the rotational detector 12 hardly projects from cover case 11, and therefore the wheel bearing unit can be made compact. Furthermore, because the diameter of the pitch circle of the radially outer ends of the projections 10a of the pulser 10 is as large as possible inside the cover case 11, when compared with a case in which the pulser is formed at the outer edge of the nut, it is possible to increase the number of projections 10a and thereby improve the detection capability of the rotational detector.

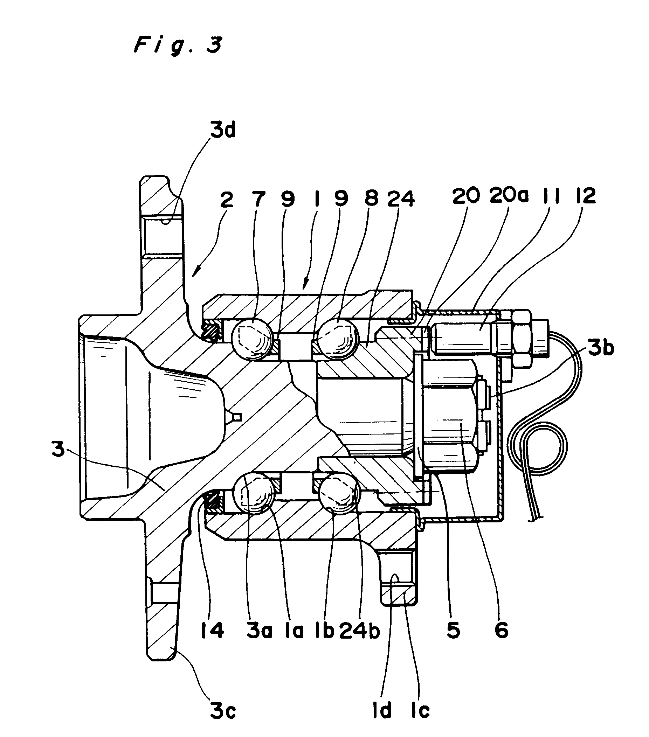

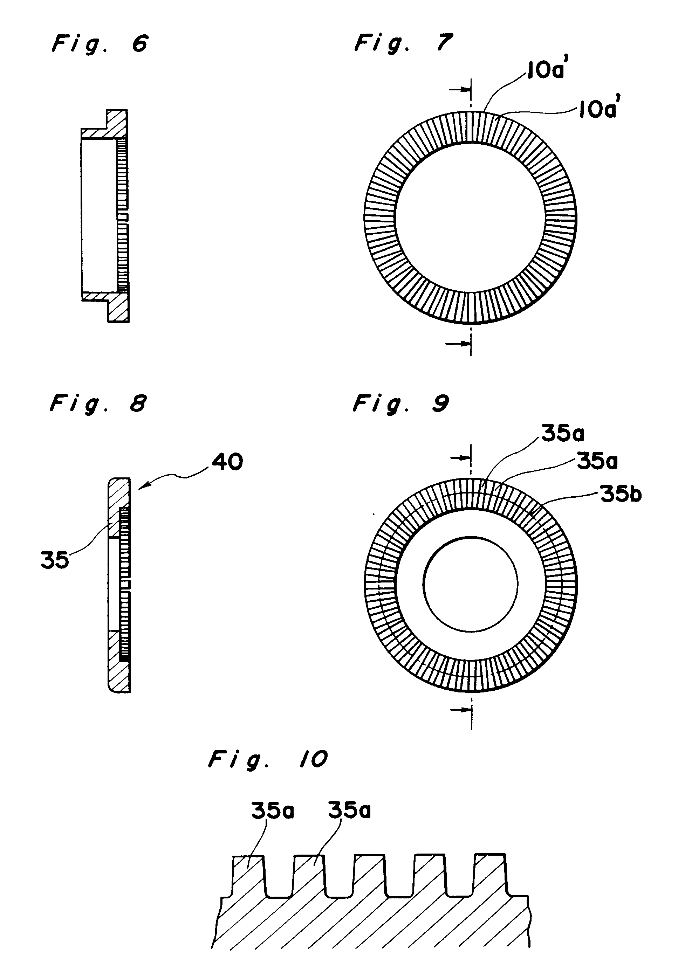

In the first embodiment just described, the pulser 10 which is an annular member and which has radiating projections 10a at uniform intervals on its end face is provided around the fitting surface 4a of the inner ring 4, but similar projections 20a may be directly and integrally formed on an end surface of large diameter portion 20 of the inner ring 24 as shown in Fig. 3. Furthermore, the pulser may alternatively be ring-shaped with an L-shaped ring cross section as shown in Figs. 6 and 7, having projections 10a' formed similarly to those of pulser 10 on an end perpendicular to the axis, and be fitted over the fitting surface 4a of inner ring 4.

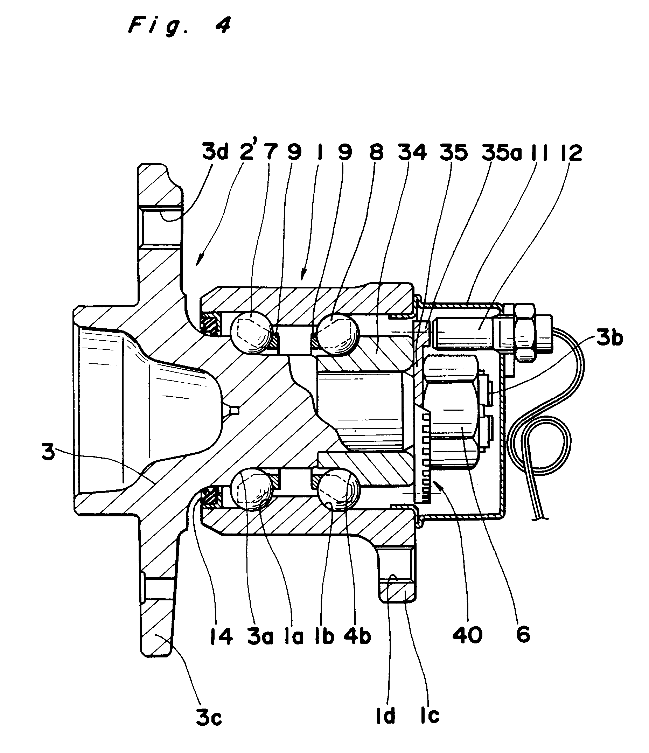

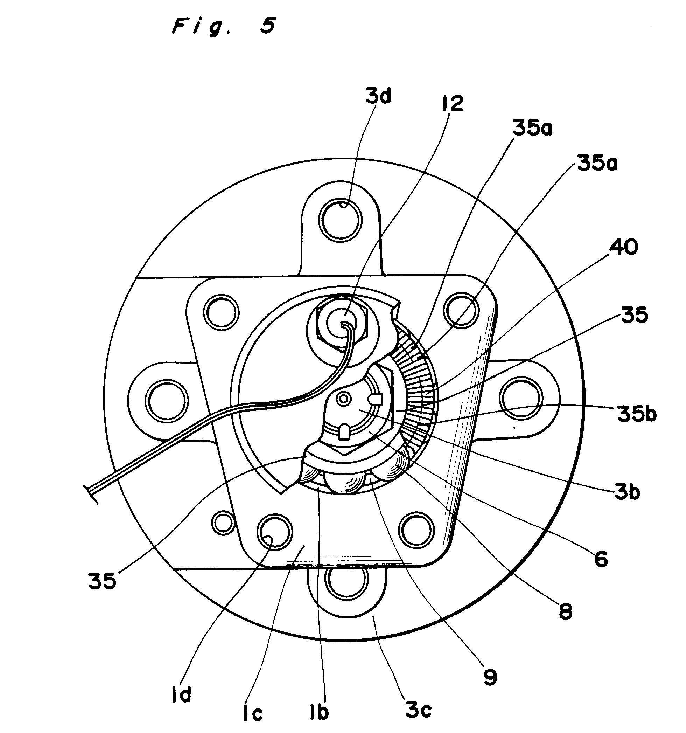

Fig. 4 and Fig. 5 are a vertical cross section and front view, respectively, of a second embodiment of an automobile wheel bearing unit according to the present invention. Like parts in Figs. 1,2,3,4 and 5 are identified with like reference numbers, and further description of like parts is here omitted with only different members hereafter described. An internal member 2' is comprised of axle 3 having flange 3c at one end to which is mounted a wheel, not shown in the figure, and of inner ring 34, which is ring-shaped and in cross-section a simplified L-shape and is fitted on the other end of axle 3. The inner ring 34 is held on said axle 3 by washer 35 and nut 6 screwed to external thread 3b on the other end of said axle 3. As shown in Figs. 8,9 and 10, at the edge of an axial face of said washer 35 there are axial projections 35a extending in the radial direction at an even spacing in the circumferential direction, similar to pulser 10. Thus a pulser 40 is provided. Fig. 5 shows the pitch circle 35b of the projections 35a.

When a vehicle is driven with the automobile wheel bearing unit constructed as so described, axle 3 on which the wheel and inner ring 34 are mounted, rotates and the pulser 40 formed on the washer 35 rotates in conjunction with them. Magnetic flux emitted from the permanent magnet of the rotational detector 12 mounted on the cover case 11 on the chassis side in opposition to the pulser 40 is thus varied by the projections radiating from the pulser, and an AC voltage of a frequency proportional to the speed of pulser 40 is produced in the coil of rotational detector 12. Next, the frequency of the AC voltage output from rotational detector 12 is detected by a detector, not shown in the figure, and the speed of the wheel is obtained. In addition to providing the same various advantages of the first embodiment herebefore described, the present embodiment which provides pulser 40 on washer 35, has the advantage of reducing the number of parts and enabling a cost reduction.

In the second embodiment of the present invention, nut 6 and washer 35 having pulser 40 are provided separately from each other, but it is also possible to integrally form the nut with the washer constituting said pulser.

As will be apparent from the above description of the present invention, an automobile wheel bearing unit according to the present invention is provided with a sealing member covering a minimum area in which area an annular member confronts a rotational detector which detects a rotational speed of the annular member, thereby preventing the penetration of grit, water and other foreign substances to said area and thereby preventing damage to such an area. Thus the rotational speed of the wheel over an extended period with good precision can be detected.

Furthermore, because said annular member is provided at an end of an internal member to which is mounted a wheel, said annular member can be made smaller and lighter in weight, and the automobile wheel bearing unit can therefore be made more compact when compared with conventional devices in which such an annular member is provided on an external member to which is mounted a wheel. Moreover, because the rotational detector is provided on the external member in such a manner that the rotational sensor is positioned between an inner peripheral surface of the sealing member covering a nut and an outer peripheral surface of the nut and is opposit as taken in the axial direction of the unit to the annular member, the rotational detector can be compactly built into the sealing member, and the automobile wheel bearing unit can be made smaller, lighter in weight, and compact. Furthermore, because the annular member is provided on the internal member and the rotational detector is positioned on the peripheral side of the nut in opposition to the annular member to detect the speed of the annular member, it is possible to form more projections when multiple projections are formed on an end face of the annular member radiating at a uniform interval in the circumferential direction than when compared with the case in which such a member is provided on an end face of the nut, thus increasing the number of pulses generated and thereby making it possible to increase the resolution.

## Claims

1. An automobile wheel bearing unit of the kind which has a cylindrical external member (1) having an outer flange (1c) through which the cylindrical external member is to be attached to a chassis of an automobile, an internal member (2,2') comprising an axle (3) having at one end a flange (3c) for carrying a wheel and an inner ring (4,24,34) fitted around the other end of the axle, and rolling elements (7,8) and a cage (9) which are interposed between the cylindrical external member and internal member, including:
(a) a nut (6) fitted around the other end of the internal member (2,2') for rotatably holding the internal member in a fixed position with respect to the cylindrical external member (1) via the rolling elements (7,8);
(b) a first sealing member (11) fixed to the cylindrical external member (1) and having a peripheral portion extending circumferentially around said nut (6) radially outwardly thereof and an end portion spaced axially from said nut (6), so that the first sealing member covers the nut (6);
(c) a second sealing member (14) provided between the cylindrical external member (1) and internal member (2,2') on the wheel side of the bearing unit for sealing a gap between the cylindrical external member and internal member;
(d) an annular member (10,20,35) which is fitted against, or is part of, said inner ring (4,24,34) of the internal member (2,2') near the nut (6) and is provided with a plurality of projections (10a,20a,35a) spaced circumferentially from each other and projecting axially towards said end portion of said first sealing member (11) from an axial end face of said annular member,said projections lying radially between said peripheral portion of said first sealing member and the outer peripheral surface of said nut, and the diameter of the circle of the radially outer ends of the projections (10a, 26a, 35a) being as large as possible within the stationary structure comprised of the external member (1) and the first sealing member (11), and
(e) a rotational detector (12) for detecting rotational speed of the annular member (10,20,35) by detecting the passing of said projections, wherein the rotational detector (12) is mounted on said end portion of said first sealing member and extends in an axial direction between said peripheral portion of the sealing member (11) and the outer peripheral surface of the nut (6) so as to lie radially therebetween, and has an axial end remote from said end portion of said first sealing member and located axially closely spaced from said projections (10a,20a,35a).

## Patentansprüche

1. Radlagereinheit für ein Automobil mit einem zylindrischen Außenteil (1), das einen Außenflansch (1c) zur Befestigung des Außenteils am Chassis eines Automobils aufweist, einem Innenteil (2, 2') mit einer Welle (3), die an einen Ende einen Flansch (3c) zum Tragen eines Rades und einem das andere Ende der Welle umgebenden Innenring (4, 24, 34) aufweist, und Wälzelementen (7, 8) und einem Käfig (9), die zwischen dem zylindrischen Außenteil und dem Innenteil eingesetzt sind, und aufweisend:
a) eine Mutter (6), die auf das andere Ende des Innenteils (2, 2') aufgesetzt ist, um das Innenteil in einer festgelegten Position relativ zum zylindrischen Außenteil (1) über die Wälzelemente (7, 8) drehbar zu halten;
b) ein erstes Dichtelement (11), das an dem zylindrischen Außenteil befestigt ist und einen Umfangsteil, der sich im radialen Abstand von der Mutter (6) um diese herum erstreckt, sowie einen Stirnteil im axialen Abstand von der Mutter (6) aufweist derart, daß das erste Dichtelement die Mutter (6) abdeckt;
c) ein zweites Dichtelement (14), das zwischen dem zylindrischen Außenteil (1) und dem Innenteil (2, 2') der Radseite der Radlagereinheit angeordnet ist, um den Spalt zwischen dem zylindrischen Außenteil und dem Innenteil abzudichten;
d) einem Ringteil (10, 20, 35), welches mit dem Innenring (4, 24, 34) des Innenteils (2, 2') nahe der Mutter (6) verbunden oder einstückig ausgebildet ist und mit einer Anzahl von Vorsprüngen (10a, 20a, 35a) versehen ist, die in Umfangsrichtung von einander beabstandet sind und von einer axialen Stirnfläche des Ringelements axial in Richtung auf einen Stirnabschnitt des ersten Dichtelementes (11) vorspringen, wobei diese Vorsprünge radial zwischen den Umfangsteil des ersten Dichtelementes und dem Außenumfang der Mutter liegen und der Durchmesser des Kreises der radial äußeren Enden der Vorsprünge (10a, 26a, 35a) so groß wie möglich innerhalb der vom Außenteil (1) und dem ersten Dichtelement (11) gebildeten ortsfesten Struktur ist und
e) einen Drehungsdetektor (12) zum Detektieren der Drehgeschwindigkeit des Ringelementes (10, 20, 35) durch Detektierung des Vorbeigangs der Vorsprünge, wobei der Drehungsdetektor (12) an dem Stirnteil des ersten Dichtelementes befestigt ist und sich in Axialrichtung zwischen dem Umfangsteil des Dichtelementes (11) und der äußeren Umfangsfläche der Mutter (6) erstreckt, so daß er zwischen diesen liegt, wobei das von dem Stirnteil des ersten Dichtelementes entfernte Axialende des Drehungsdetektors mit kleinem Axialabstand von den Vorsprüngen (10a, 20a, 35a) angeordnet ist.

## Revendications

1. Unité de palier de roue d'automobile du type qui comprend un élément extérieur cylindrique (1) ayant un flasque (1c) par l'intermédiaire duquel l'élément extérieur cylindrique se fixe au châssis d'une automobile, un élément intérieur (2, 2') comprenant un arbre (3) ayant à une extrémité un flasque (3c) destiné à porter une roue et une bague intérieure (4, 24, 34) ajustée sur l'autre extrémité de l'arbre, ainsi que des éléments roulants (7, 8) et une cage (9) qui sont interposés entre l'élément extérieur cylindrique et l'élément intérieur, cette unité comprenant :
(a) un écrou (6) monté autour de l'autre extrémité de l'élément intérieur (2, 2') pour tenir l'élément intérieur, libre en rotation, dans une position fixe par rapport à l'élément extérieur cylindrique (1) avec interposition des éléments roulants (7, 8) ;
(b) un premier élément de fermeture (11) fixé à l'élément extérieur cylindrique (1) et comprenant une partie périphérique qui s'étend circonférentiellement autour dudit écrou (6), radialement à l'extérieur de celui-ci, et une partie terminale espacée axialement dudit écrou (6), de sorte que le premier élément de fermeture couvre l'écrou (6) ;
(c) un second élément de fermeture (14) prévu entre l'élément extérieur cylindrique (1) et l'élément intérieur (2, 2'), sur le côté roue de l'unité de palier, pour fermer hermétiquement un espace libre compris entre l'élément extérieur cylindrique et l'élément intérieur ;
(d) un élément annulaire (10, 20, 35) qui est ajusté contre ladite bague intérieure (4, 24, 34) de l'élément intérieur (2, 2'), ou fait partie de cette bague intérieure, à proximité de l'écrou (6) et est muni d'une pluralité de saillies (10a, 20a, 35a) espacées circonférentiellement les unes des autre et qui font saillie axialement vers ladite partie terminale dudit premier élément de fermeture (11), en saillie sur une face terminale axiale dudit élément annulaire, lesdites saillies s étendant radialement entre ladite partie périphérique dudit premier élément de fermeture et la surface périphérique extérieure dudit écrou, et le diamètre du cercle des extrémités radialement extérieures des saillies (10a, 26a, 35a) étant aussi grand que possible à l'intérieur de la structure fixe composée de l'élément intérieur (1) et du premier élément de fermeture (11), et
(e) un détecteur de rotation (12) destiné à détecter la vitesse de rotation de l'élément annulaire (10, 20, 35) en détectant le passage desdites saillies, dans lequel le détecteur de rotation (1) est monté sur ladite partie terminale dudit premier élément de fermeture et s étend dans une direction axiale entre ladite partie périphérique de l'élément de fermeture (11) et la surface périphérique extérieure de l'écrou (6) de manière à se trouver radialement entre ces éléments, et possède une extrémité axiale éloignée de ladite partie terminale dudit premier élément de fermeture et placée à très petite distance axiale desdites saillies (10a, 20a, 35a).
